# EUROPEAN PATENT APPLICATION

(11) **EP 4 327 662 A1**
(43) Date of publication of application: **28.02.2024**
(21) Application number: 23188648.2
(22) Date of filing: 31.07.2023
(51) Int. Cl.: A23C 9/12, A47J 29/00, A47J 36/00

(54) **A YOGURT MAKER FOR MAKING HOMOGENEOUS YOGURT**

(30) Priority: 26.08.2022 TR 202213410
(71) Applicant: Arçelik Anonim Sirketi, 34445 Istanbul (TR)
(72) Inventor: BEDIR, ERSIN, 34445 ISTANBUL (TR); YAYLA, SONAT, 34445 ISTANBUL (TR); MUTLU, EREN, 34445 ISTANBUL (TR); KARAPINAR, UGUR, 34445 ISTANBUL (TR); VANCI, CAN ONUR, 34445 ISTANBUL (TR)

(57) **Abstract**

The present invention relates to a yogurt maker (1) comprising a body (2); a processing chamber (3) which is provided in the body (2) and wherein the food preparation process is performed; a heat plate (4) which is provided in the body (2) and whereon the food containers are placed; at least one heating member (5) which is provided under the heat plate (4); at least one cooling member (6) which is provided around the heating member (5); a heat transfer member (7) which is provided under the heating member (5) and the cooling member (6); and a fan (8) which is provided under the heat transfer member (7).

## Description

The present invention relates to a yogurt maker for making homogeneous yogurt.

Today, yogurt is a foodstuff which is often consumed in almost every household. Yogurt is often produced by boiling and fermenting milk at home. Since the boiling process and fermentation temperature of the milk is important for the quality of yogurt, the process must be carried out under constant observation. This situation causes a waste of time for consumers and makes the process difficult. Therefore, automatic yogurt makers are frequently used today. Since yogurt is consumed daily, especially in families with small children, the yogurt makers become very useful. The yogurt makers provide the user with functions such as heating, cooling, keeping warm, time setting, automatic termination, etc. The fermentation process in the yogurt maker is carried out with various food preparation containers. There are various options such as one kilogram food preparation containers or containers suitable for a serving. However, when more than one food preparation container is used, it becomes difficult to make yogurt with the same taste and consistency in each container.

In the state of the art Japanese Patent No. JPH0951759, a yogurt maker is disclosed, which performs heating and cooling.

The aim of the present invention is the realization of a yogurt maker which makes homogeneous yogurt with the same quality.

The yogurt maker realized in order to attain the aim of the present invention, explicated in the first claim and the respective claims thereof, comprises a body; a processing chamber which is provided in the body; a heat plate; a heating member which is provided under the heat plate; at least one cooling member which is provided around the heating member; at least one heat transfer member which transfers heat; and a fan which is provided under the heat transfer member. The yogurt making process is performed by providing fermentation and storage conditions, operating the heating and cooling members together, and homogeneously distributing the heat in the processing chamber.

During the yogurt making process, the necessary ingredients are added into the food containers and the containers are placed in the processing chamber. By performing the heating and cooling processes at the appropriate time and at the appropriate level, the fermentation process is completed and the yogurt is prepared. A large container or a plurality of containers can be used in the processing chamber.

The yogurt maker of the present invention comprises a separator which has a plurality of housings thereon. The housings have a matching form with the food containers. Thus, the position of the food containers in the processing chamber is defined. By means of the separator, each food container is located at the same distance from the nearest heating member and cooling member as other food containers. Consequently, the desired homogeneity and the same quality are provided in every food container.

In an embodiment of the present invention, the yogurt maker comprises at least one holder which is provided on the walls of the processing chamber. By means of the holders, the separator can be kept fixed at a certain height in the processing chamber. Thus, the food containers are enabled to be properly fitted into the housings.

In an embodiment of the present invention, the yogurt maker comprises at least one recess which is provided on the separator and at least one protrusion which is provided on the wall of the processing chamber and which matches the recess. By fitting the recess over the protrusion, the separator is centered in the processing chamber.

In an embodiment of the present invention, the yogurt maker comprises a plurality of holes which are provided on the separator. By means of the holes, any condensation on the separator is prevented.

In an embodiment of the present invention, the yogurt maker comprises the separator which is manufactured from a material which does not conduct heat. Thus, the separator does not affect the heat transfer in the processing chamber.

By means of the present invention, a yogurt maker is realized, wherein yogurt is made with the same homogeneity in a plurality of food containers used at the same time.

A yogurt maker realized in order to attain the aim of the present invention is illustrated in the attached figures, where:

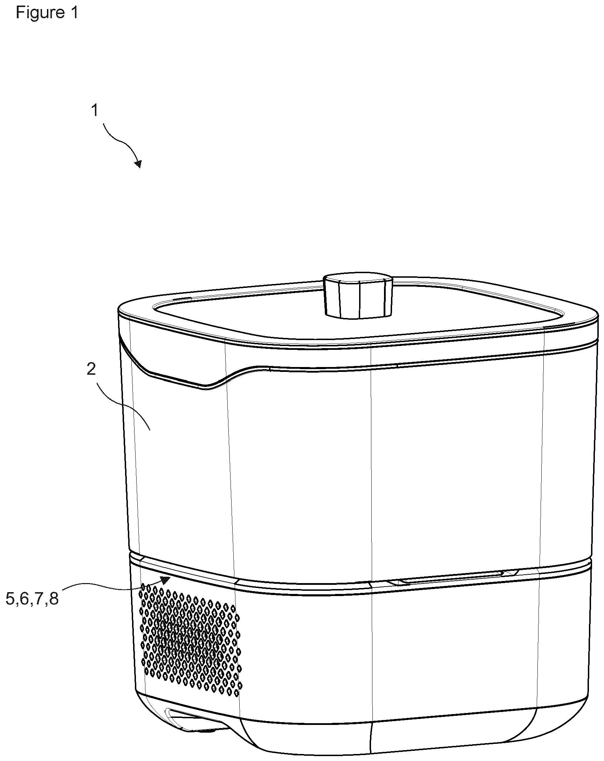

Figure 1 - is the perspective view of the yogurt maker.

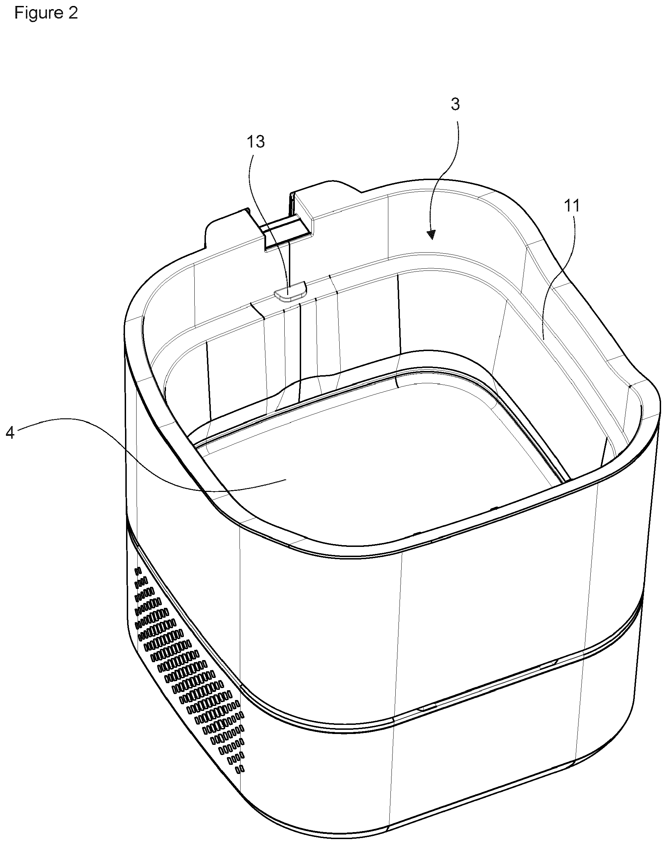

Figure 2 - is the perspective view of the processing chamber.

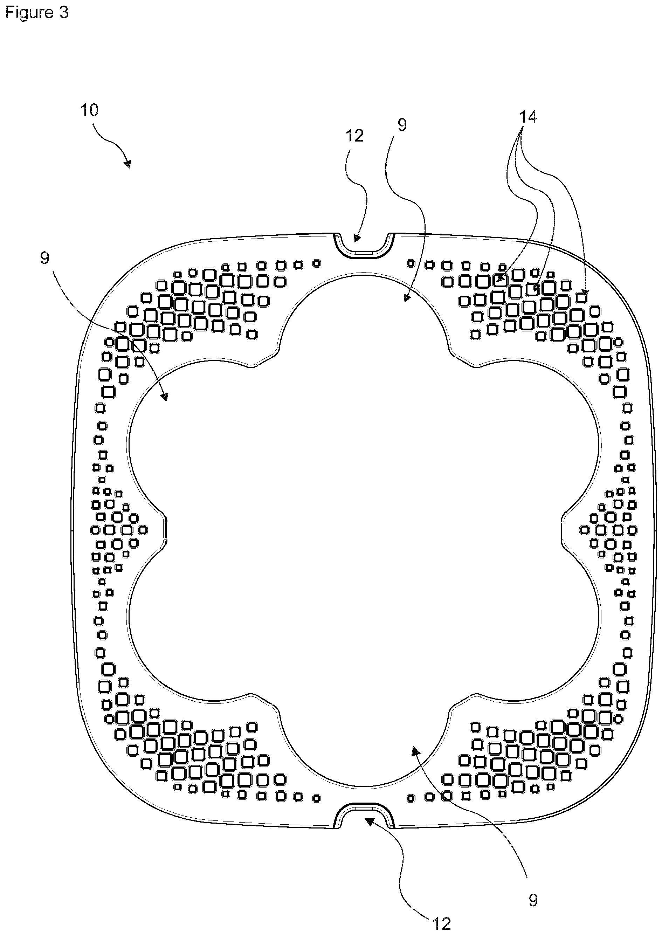

Figure 3 - is the top view of the separator.

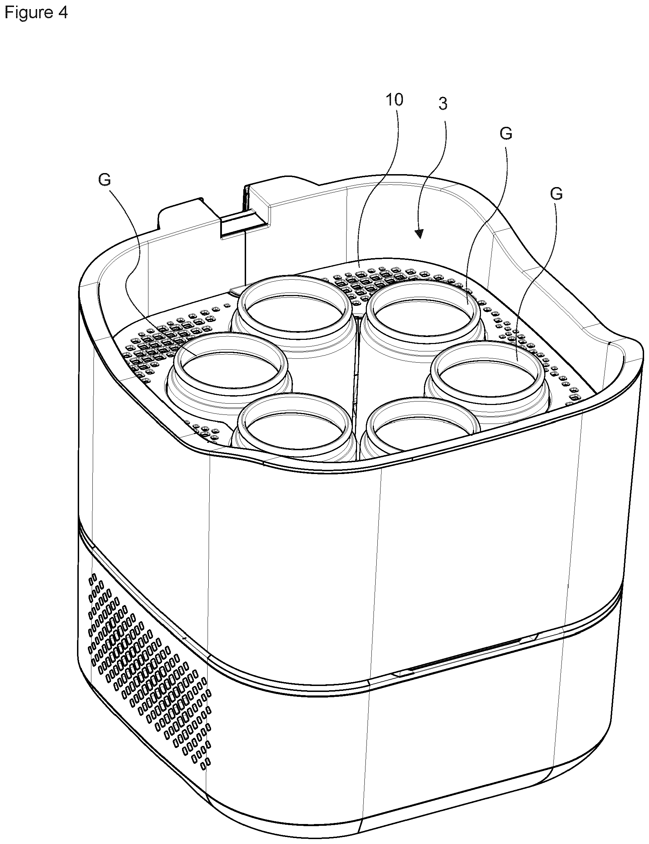

Figure 4 - is the perspective view of the processing chamber and the food containers.

The elements illustrated in the figures are numbered as follows:
1- Yogurt maker
2- Body
3- Processing chamber
4- Heat plate
5- Heating member
6- Cooling member
7- Heat transfer member
8- Fan
9- Housing
10- Separator
11- Holder
12- Recess
13- Protrusion
14- Hole

The yogurt maker (1) comprises a body (2); a processing chamber (3) which is provided in the body (2) and wherein the food preparation process is performed; a heat plate (4) which is provided in the body (2) and whereon the food containers are placed; at least one heating member (5) which is provided under the heat plate (4); at least one cooling member (6) which is provided around the heating member (5); a heat transfer member (7) which is provided under the heating member (5) and the cooling member (6); and a fan (8) which is provided under the heat transfer member (7). The ingredients to be used in the yogurt making process are added to the food containers and the food containers are placed in the processing chamber (3). The heating and cooling processes, which are suitable for the fermentation process, are performed in order and the yogurt making process is realized.

The yogurt maker (1) of the present invention comprises a separator (10) which enables the food containers to be at the same distance from the nearest heating member (5) and the cooling member (6) by means of a plurality of housings (9) compatible with the food containers thereon. The distance of the food containers to the heating and cooling members (5,6) during the yogurt making process is one of the important factors affecting the fermentation. By placing the food containers on the housings (9) on the separator (10), it is ensured that each food container is at the same distance from the nearest heating member (5) and cooling member (6) as the other food containers. Thus, each food container is located at the same distance from the nearest heating member (5) and cooling member (6). Thus, the fermentation process takes place under the same conditions in each food container. The fermentation process takes place under the same conditions in each food container and homogeneous yogurt is prepared as per preference in each container.

In an embodiment of the present invention, the yogurt maker (1) comprises at least one holder (11) which is provided on the walls of the processing chamber (3) and which is seated on the separator (10) so as to enable the same to be fixed. By means of the holder (11), the separator (10) is kept at the determined height. Thus, the food containers are placed more easily.

In an embodiment of the present invention, the yogurt maker (1) comprises at least one recess (12) which is provided on the separator (10), and at least one protrusion (13) which is provided on the wall of the processing chamber (3) so as to correspond to the recesses (12) such that the separator (10) is placed into the processing chamber (3) in an aligned manner. By fitting the recess (12) on the separator (10) over the protrusion (13) on the wall of the processing chamber (13), the separator (10) is centered. Thus, the position of each food container in the processing chamber (3) is defined.

In an embodiment of the present invention, the yogurt maker (1) comprises a plurality of holes (14) which are provided on the separator (10) and which prevent any condensation on the separator (10). The separator (10) comprises a plurality of holes (14) with certain shapes arranged side by side. By means of the holes (14), any condensation on the separator (10) is prevented, thus maintaining the quality and consistency of the yogurt.

In an embodiment of the present invention, the yogurt maker (1) comprises the separator (10) which is manufactured from a material which does not conduct heat. The separator (10) does not affect the heat transfer. Thus, it is ensured that the food containers are placed properly without causing a change in the cooking algorithm.

By means of the present invention, a yogurt maker (1) is realized, comprising a separator (10) having a plurality of housings (9) whereon the food containers are placed such that the position thereof with respect to the heating member (5) and the cooling member (6) is determined. By means of the separator (10), the food containers located in separate positions are enabled to be at an equal distance from the heating members (5) and the cooling members (6).

## Claims

1. A yogurt maker (1) **comprising** a body (2); a processing chamber (3) which is provided in the body (2) and wherein the food preparation process is performed; a heat plate (4) which is provided in the body (2) and whereon the food containers are placed; at least one heating member (5) which is provided under the heat plate (4); at least one cooling member (6) which is provided around the heating member (5); a heat transfer member (7) which is provided under the heating member (5) and the cooling member (6); and a fan (8) which is provided under the heat transfer member (7), **characterized by** a separator (10) which enables the food containers to be at the same distance from the nearest heating member (5) and the cooling member (6) by means of a plurality of housings (9) compatible with the food containers thereon.

2. A yogurt maker (1) as in Claim 1, **characterized by** at least one holder (11) which is provided on the walls of the processing chamber (3) and which is seated on the separator (10) so as to enable the same to be fixed.

3. A yogurt maker (1) as in Claim 1 or Claim 2, **characterized by** at least one recess (12) which is provided on the separator (10), and at least one protrusion (13) which is provided on the wall of the processing chamber (3) so as to correspond to the recesses (12) such that the separator (10) is placed into the processing chamber (3) in an aligned manner.

4. A yogurt maker (1) as in any one of the above claims, **characterized by** a plurality of holes (14) which are provided on the separator (10) and which prevent any condensation on the separator (10).

5. A yogurt maker (1) as in any one of the above claims, **characterized by** the separator (10) which is manufactured from a material which does not conduct heat.
